(19) Europäisches Patentamt
European Patent Office
Office européen des brevets

(11) Numéro de publication: **0 089 258 B1**

(12) **FASCICULE DE BREVET EUROPEEN**

(45) Date de publication du fascicule du brevet: **29.01.86**

(51) Int. Cl.⁴: **G 02 F 1/01**, G 02 F 1/13

(21) Numéro de dépôt: **83400391.5**

(22) Date de dépôt: **25.02.83**

(54) **Ecran d'un dispositif de visualisation utilisant un effet mixte thermique et électrique.**

(30) Priorité: **09.03.82 FR 8203937**

(43) Date de publication de la demande: **21.09.83 Bulletin 83/38**

(45) Mention de la délivrance du brevet: **29.01.86 Bulletin 86/5**

(84) Etats contractants désignés: **DE GB IT NL**

(56) Documents cités:
**EP - A - 0 023 447**
**EP - A - 0 065 397**
**FR - A - 1 484 585**
**FR - A - 2 197 186**
**US - A - 3 410 999**
**US - A - 3 435 445**

**JOURNAL OF APPLIED PHYSICS, vol. 52, no. 3, mars 1981, partie 1, pages 1294-1300, American Institute of Physics, New York, USA D. ARMITAGE: "Thermal properties and heat flow in the laser addressed liquid-crystal display"**
**"Handbook of Chemistry and Physics" Chemical Rubber Co, 1970-71, tables E-6 à E-9**

(73) Titulaire: **THOMSON-CSF, 173, Boulevard Haussmann, F-75379 Paris Cedex 08 (FR)**

(72) Inventeur: **Mourey, Bernard, THOMSON-CSF SCPI 173, bld Haussmann, F-75379 Paris Cedex 08 (FR)**
Inventeur: **Hareng, Michel, THOMSON-CSF SCPI 173, bld Haussmann, F-75379 Paris Cedex 08 (FR)**
Inventeur: **Thirant, Lydie, THOMSON-CSF SCPI 173, bld Haussmann, F-75379 Paris Cedex 08 (FR)**

(74) Mandataire: **Wang, Pierre et al, THOMSON-CSF SCPI 173, Bld Haussmann, F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

**Description**

La présente invention concerne les dispositifs de visualisation comprenant un matériau électro-optique réagissant à un effet mixte thermique et électrique et utilisés à des fins d'affichage ou de reproduction d'images.

Il est maintenant bien connu d'utiliser un effet mixte thermique et électrique pour commander l'orientation des molécules composant un cristal liquide, notamment par le brevet français de la Demanderesse N° 7 713 738, publié sous le N° FR-A-2 389 955 et déposé le 5 Mai 1977. On peut également utiliser cet effet afin de commander d'autres matériaux électro-optiques ou d'améliorer les performances des dispositifs qui les emploient. Ceci a conduit la Demanderesse à déposer une demande de brevet français le 15 Décembre 1981 enregistrée sous le numéro 8 123 437 (FR-A-2 518 291). Cette demande proposait de réduire le temps de réponse d'un dispositif de visualisation électrochromique et d'assurer un seuil plus net de l'effet électrochromique par l'emploi combiné d'un effet thermique et d'un effet électrique.

L'apport de chaleur peut se faire par rayon laser ou par le passage d'un courant électrique dans des bandes chauffantes. Cette dernière solution est de plus en plus employée surtout dans les dispositifs à cristaux liquides smectiques affichage matriciel.

C'est ainsi que la demande de brevet européen, publiée sous le numéro EP-A-0 023 447 décrit un dispositif de visualisation à cristal liquide possédant des bandes chauffantes situées sur l'une des plaques enserrant le cristal liquide et en contact avec le cristal liquide. Les bandes chauffantes sont transparentes et la plaque qui les supporte est en verre.

Selon l'article «THERMAL PROPERTIES AND HEAT FLOW IN THE LASER ADDRESSED LIQUID-CRISTAL DISPLAY» de D. ARMITAGE publié dans la revue JOURNAL OF APPLIED PHYSICS, volume 52, numéro 3, mars 1981 partie 1, pages 1294-1300, colonne 1 de la page 1295, lignes 10 à 15, un tel verre aura couramment une conductivité thermique comprise entre $0{,}9614 \cdot 10^{-2}$ et $1{,}0868 \cdot 10^{-2}$ J/cm.s.K pour une gamme de température comprise entre 0°C et 130°C.

Dans un dispositif de ce type, il convient, pour des raisons d'économie et afin de réduire le plus possible le temps de réponse du dispositif, que l'énergie thermique fournie ne soit pas gaspillée dans la lame faisant face aux bandes chauffantes. Cependant, il est nécessaire également que lorsque l'adressage d'une zone de l'écran correspondant à une bande chauffante est terminé la chaleur accumulée dans cette zone soit évacuée par la lame supportant la bande chauffante correspondante. Actuellement, ceci n'est pas réalisé dans les dispositifs de visualisation où les lames supportant les électrodes constituant une matrice d'affichage sont soit de même nature, soit ne sont pas choisies en fonction des critères exposés ci-dessus.

Afin de pallier à ces inconvénients, on propose d'employer dans ces dispositifs des lames choisies en fonction de leur conductivité thermique, la lame faisant face aux bandes chauffantes devant dissiper le moins possible la chaleur fournie au milieu électro-optique et la lame supportant ces bandes permettant au contraire une évacuation thermique raisonnable après cessation de l'apport de chaleur.

L'invention a donc pour objet un écran d'un dispositif de visualisation à commande thermo-électrique comprenant une première et une seconde lame dont l'une au moins est transparente, lesdites lames enserrant une couche de matériau électro-optique réagissant à un effet mixte thermique et électrique, ladite première lame supportant sur sa face interne au moins une électrode, ladite seconde lame supportant sur sa face interne au moins une électrode chauffante, lesdites électrodes permettant d'appliquer audit matériau un champ électrique de commande, caractérisé en ce que ladite première lame comprend du côté dudit matériau électro-optique au moins une couche d'un matériau isolant dont la conductivité thermique est inférieure à $1{,}05 \cdot 10^{-2}$ J/cm.s.K et inférieure à la conductivité thermique de la seconde lame, et dont l'épaisseur est au moins égale à trois fois l'épaisseur de ladite couche de matériau électro-optique.

L'invention sera mieux comprise au moyen de la description ci-après et des figures annexées parmi lesquelles:

la figure 1 est une vue partielle en coupe d'un écran de visualisation,

les figures 2 et 3 sont des diagrammes représentant des profils de température.

La description qui va suivre portera sur les écrans de visualisation à cristaux liquides smectiques qui utilisent principalement ce type d'affichage. Cependant, les autres écrans de visualisation où l'affichage est réalisé par un effet mixte thermique et électrique entrent également dans le cadre de l'invention.

La figure 1 est une vue partielle en coupe d'un écran de visualisation à cristaux liquides smectiques. On distingue le cristal liquide 1 possédant une phase smectique. Il est enserré entre deux lames 2 et 3 par exemple en verre. La lame 2 supporte une série d'électrodes parallèles 5 et la lame 3 une série d'électrodes parallèles 4 croisant les électrodes 5 par exemple orthogonalement. Un exemple typique de cristal liquide smectique utilisable est le cyano-octyl-4-4'-biphényle de formule $C_8H_{17}$ 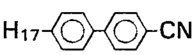 CN

qui présente les transitions de phases suivantes:

$$K \xrightarrow{20°C} S_A \xrightarrow{32{,}5°C} N \xrightarrow{40°C} I.$$

La couche de cristal liquide 1 est insérée entre les lames 2 et 3 dans un espace d'environ 10 à 15 microns de largeur défini par des cales d'épaisseur non représentées. Les lames 2 et 3 peuvent avoir une épaisseur de plusieurs millimètres, ce qui représente une dimension beaucoup plus grande que l'épaisseur du cristal liquide. Si le système fonctionne par transparence, les électrodes 4 et 5 seront réalisées en un matériau transparent par exemple en oxyde d'étain ou d'indium ou en mélange de ces deux oxydes. Si le système fonctionne en réflexion, l'un des deux réseaux d'électrodes sera transparent et l'autre

en une matière réfléchissant la lumière par exemple en aluminium. Il est avantageux de choisir l'un des deux réseaux d'électrodes d'application du champ électrique pour chauffer le cristal liquide et constituer également le réseau de bandes chauffantes.

Des calculs thermiques utilisant un modèle unidimensionnel permettent d'obtenir des profils de température dans les écrans suivant un axe transversal à ces écrans. Ces calculs ont porté sur deux écrans dont la couche de cristal liquide smectique est du cyano-octyl-4-4'-biphényle mentionné plus haut et qui a 12 microns d'épaisseur. De façon plus précise, les écrans sont du type représenté à la figure 1. On distingue, en allant de bas en vue, une lame 3 transparente, des électrodes 4 en aluminium permettant le chauffage du cristal liquide par le passage d'un courant électrique et formant les lignes de la matrice de visualisation, le cristal liquide smectique 1 déjà mentionné, des électrodes 5 transparentes sur lesquelles s'appliquent les tensions vidéo du dispositif et formant les colonnes de la matrice de visualisation et une lame 2 transparente. L'écran fonctionne donc en réflexion, la lumière pénétrant par la lame 2, traversant les électrodes transparentes 5 et le cristal liquide, et se réfléchissant sur les électrodes 4. Du point de vue thermique, les électrodes lignes et colonnes ont une épaisseur négligeable et il ne faut prendre en compte que la lame inférieure 3, la couche de cristal liquide et la lame supérieure 2. Le flux de chaleur est apporté à l'interface lame inférieure-cristal liquide. Pour avoir un bon fonctionnement de l'écran, il faut appliquer aux lignes chauffantes une énergie telle que la température de toutes les parties de la couche de cristal liquide soit supérieure ou égale à la température de transition mésomorphe-isotrope du cristal liquide utilisé.

Lorsqu'une ligne est mise en chauffe, la chaleur dégagée se propage par conduction selon deux directions principales: vers la lame 3 d'une part, vers le cristal liquide et la lame 2 d'autre part. L'apport de chaleur contribuant exclusivement à chauffer le cristal liquide, il n'est pas bon que celle-ci soit dissipé inutilement dans les lames 2 et 3 afin de limiter la puissance de chauffage et la complexité de l'éléctronique de commande. Dans ce genre de dispositif, la tension vidéo est appliquée lors du retour du cristal liquide de la phase isotrope à la phase smectique, c'est-à-dire après interruption du chauffage de la ligne correspondant à l'élément de l'écran à commander. Pour une question de vitesse d'affichage, il faut faire en sorte que la transition de phase se fasse rapidement donc que la lame 3 puisse évacuer une certaine quantité de chaleur dans un laps de temps proportionnel. Il résulte de ces considérations qu'il est avantageux de choisir les lames 2 et 3 en raison de leur conductibilité thermique, la lame en vis-à-vis des bandes chauffantes devant avoir une conductivité thermique plus faible que la lame qui les supporte.

Les profils de température seront établis pour deux cas: d'abord lorsque la lame en vis-à-vis des bandes chauffantes est en verre, ensuite lorsque cette lame est constituée par un matériau plus isolant du point de vue thermique que le verre, le plexiglas. Les caractéristiques thermiques des corps étudiés sont les suivantes:

| | Cond. thermique (J/cm.s.K) | Densité (g/cm$^3$) | Capacité calorifique (J/g xK) |
|---|---|---|---|
| Cristal liquide | $1,84 . 10^{-3}$ | 1 | 1,25 |
| Verre | $1,04 . 10^{-2}$ | 2,5 | 0,84 |
| Plexiglas | $2,3 . 10^{-3}$ | 1,2 | 1,67 |

La figure 2 est un diagramme représentant le profil de température selon l'axe transverse d'un écran de visualisation. Ce profil correspond à un écran dont les lames 2 et 3 sont en verre et dont les autres caractéristiques ont déjà été mentionnées sur le diagramme de la figure 2. L'axe des ordonnées représente la température T en degrés centigrades à l'intérieur de l'écran, l'axe des abscisses représente l'épaisseur de l'écran E en microns. L'origine des épaisseurs est pris à l'interface constituée par la lame 3 et les lignes chauffantes 4.

Du fait de l'emplacement des bandes chauffantes, un gradient de temepérature s'établit dans la couche de cristal liquide lors de l'utilisation de l'écran. La comparaison des deux types d'écran se fera en prenant comme référence le temps $\tau$ nécessaire pour que tous les points du cristal liquide atteignent la température d'isotropie. Dans le cas de la figure 2, la température d'isotropie $T_I$ du cristal liquide qui est de 40°C, est atteinte au bout de temps $\tau$ pour une puissance de chauffe $P_1$. La courbe 6 donne le profil de température à l'intérieur de l'écran. Cette courbe présente une pente plus importante dans la zone correspondant au cristal liquide que dans les zones correspondant aux lames 2 et 3 du fait de la moins bonne conductivité thermique du cristal liquide par rapport au verre. Pour atteindre la température d'isotropie $T_I$ à l'interface cristal liquide-lame 2 en un temps $\tau$, il a fallu porter la bande chauffante en regard à la température $T_o = 52,7°C$ soit une différence de température entre les deux faces de la couche de cristal liquide de 12,7°C.

La figure 3 est un diagramme représentant le profil de température selon l'axe transverse d'un écran de visualisation identique à celui représenté à la figure 1 mais pour lequel la lame de verre 2 à été remplacée par une lame de plexiglas. Le plexiglas est un mauvais conducteur thermique comme on peut le constater d'après le tableau donné plus haut. Il est moins bon conducteur que le verre (environ 5 fois) et que le cristal liquide utilisé. Le diagramme de la figure 3 à été obtenu pour un temps $\tau$ d'application du courant de chauffage et une puissance de chauffe $P_2$, de façon à atteindre la température d'isotropie $T_I$ à l'interface cristal liquide-lame 2. La courbe 7 donne l'allure du profil de température. On remarque que la température de la bande chauffante utilisée est $T_o' = 46,1°C$. Dans ce cas, la puissance de chauffe $P_2$ appliquée est environ 30% plus faible que dans le cas où la lame 2 était en verre ($P_1$). Quant au temps d'application de la tension vidéo qui est principalement déterminé par la fuite thermique de la lame inférieure, celui-ci reste pratiquement inchangé.

L'utilisation, pour la lame 2 située en vis-à-vis des bandes chauffantes, d'un matériau plus isolant ther-

miquement que la lame 3 qui les supporte tend à bloquer le transfert de chaleur du cristal liquide vers la lame 2 et permet donc de diminuer les pertes thermiques. Pour un même fonctionnement, la présence de ce matériau permet d'utiliser une puissance de commande sensiblement inférieure à celle requise dans le cas où les deux lames sont réalisées en matériau tel que celui de la lame 3.

L'invention s'applique particulièrement bien à des écrans à rafraîchissement relativement lent des points élémentaires d'affichage, par exemple à l'écran à cristal liquide smectique dont la description suit. Cet écran a une forme carrée de 10 cm de côté et est utilisé en réflexion. Sa sctructure a été décrite par la figure 1. Les électrodes chauffantes 4 sont déposées sur la lame 3; elles sont constituées de bandes d'aluminium de façon à réfléchir la lumière incidente pénétrant dans l'écran à travers la lame 2. Les électrodes 5 sont transparentes et peuvent être réalisées en oxyde mixte d'étain et d'indium. Les deux réseaux d'électrodes 4 et 5 se croisent suivant des directions sensiblement orthogonales. Le croisement d'une électrode 4 et d'une électrode 5 définit un point d'affichage élémentaire. Dans l'exemple choisi, chaque réseau comprend 256 électrodes qui définissent des points d'affichage ayant environ 400 microns de côté. Les autres caractéristiques géométriques de l'écran sont les suivantes: épaisseur du substrat 3 supportant les électrodes chauffantes 3 mm, épaisseur de la lame 2 en vis-à-vis 1,5 mm. La couche de cristal liquide smectique a 12 microns d'épaisseur; il s'agit du cyano-octyl-4-4'-biphényle dont les caractéristiques ont été citées plus haut. Le temps d'application du courant de chauffage est de 10 ms, le temps d'application de la tension vidéo de commande 10 ms et le rafraîchissement de l'information se fait toutes les 5 secondes. La relation qui existe entre l'épaisseur de la couche du cristal liquide et le temps minimum d'adressage pour lequel on note un début d'échauffement de la lame située en vis-à-vis des électrodes chauffantes peut être obtenue à partir de l'équation de diffusion d'un flux de chaleur dans un matériau: $x = 2\sqrt{\alpha . t}$.

Dans cette équation: x est l'abscisse en cm suivant l'axe de propagation du flux de chaleur, α est la diffusivité du matériau en $cm^2/s$ et t la durée du chauffage. Mise sous une autre forme, l'équation donne le temps au bout duquel une couche chauffée sur une face commence à transmettre de la chaleur sur son autre face: $t = \frac{x^2}{4\alpha}$. La diffusivité est le rapport de la conduction thermique sur la capacité calorifique. Pour le cristal liquide considéré, on a donc:

$$\alpha = \frac{4,4 \, . \, 10^{-4}}{0,3} \simeq 1,5 \, . \, 10^{-3} \ cm^2/s.$$

Le temps t au bout duquel la lame en vis-à-vis des électrodes chauffantes sera atteinte par le flux de chaleur est: t = 0,24 ms pour une épaissuer de la couche de cristal liquide de 12 microns. Dans le cas d'un temps d'application du chauffage de 10 ms, il faut donc que la lame 2 soit très réfractaire afin d'éviter la déperdition de chaleur de ce côté de l'écran, d'où la nécessité d'utiliser du plexiglas à la place du verre.

Pour que la couche de plexiglas soit efficace, on estime que son épaisseur doit au moins être égale à trois fois l'épaisseur de la couche de cristal liquide afin qu'elle puisse jouer correctement son rôle de volant thermique. Dans le cas où la lame 2 est constituée par deux couches: une couche de verre en tant que substrat et un revêtement interne plus isolant que le substrat, ce revêtement devra avoir une épaisseur minimale correspondant à trois fois l'épaisseur de la couche de cristal liquide pour avoir une bonne efficacité.

En remplaçant dans les écrans des dispositifs de visualisation la lame de verre faisant face aux bandes chauffantes par une lame plus isolante comme le plexiglas, l'invention procure l'avantage de diminuer la puissance de commande de tels écrans. L'invention permet donc une économie en puissance de commande et par suite une réduction de l'encombrement et des coûts des systèmes mettant en oeuvre cette puissance de commande.

**Revendications**

1. Ecran d'un dispositif de visualisation à commande thermo-électrique comprenant une première et une seconde lame dont l'une au moins est transparente, lesdites lames enserrant une couche (1) de matériau électro-optique réagissant à un effet mixte thermique et électrique, la dite première lame (2) supportant sur sa face interne au moins une électrode (5), ladite seconde lame (3) supportant sur sa face interne au moins une électrode chauffante (4), lesdites électrodes permettant d'appliquer audit matériau un champ électrique de commande, caractérisé en ce que ladite première lame (2) comprend du côté dudit matériau électro-optique au moins une couche d'un matériau isolant dont la conductivité thermique est inférieure à $1.05.10^{-2}$ J/cm.s.K et inférieure à la conductivité thermique de la seconde lame (3), et dont l'épaisseur est au moins égale à trois fois l'épaisseur de ladite couche (1) de matériau électro-optique.

2. Ecran selon la revendication 1, caractérisé en ce que lesdites électrodes forment des réseaux d'électrodes croisées.

3. Ecran selon le revendication 1, caractérisé en ce que ladite première lame est entièrement constituée par ledit matériau isolant.

4. Ecran selon le revendication 3, caractérisé en ce que ladite première lame est en plexiglas et que ladite seconde lame est en verre.

5. Ecran selon la revendication 1, caractérisé en ce que ledit matériau électro-optique est constitué par un cristal liquide présentant une phase smectique.

**Patentansprüche**

1. Schirm einer Anzeigevorrichtung mit thermoelektrischer Steuerung, versehen mit einer ersten und einer zweiten Scheibe, wovon wenigstens eine lichtdurchlässig ist, wobei diese Scheiben eine Schicht

(1) aus elektrooptischem Material einfassen, welches auf einen gemischt thermischen und elektrischen Effekt auspricht, wobei die genannte erste Scheibe (2) auf ihrer Innenfläche wenigstens eine Elektrode (5) trägt, die genannte zweite Scheibe (3) auf ihrer Innenfläche wenigstens eine Heizelektrode (4) trägt und wobei die genannten Elektroden das Anlegen eines elektrischen Steuerfeldes an das genannte Material gestatten, dadurch gekennzeichnet, dass die genannte erste Scheibe (2) auf der Seite des genannten elektrooptischen Materials wenigstens eine Schicht aus einem Isoliermaterial enthält, dessen thermische Leitfähigkeit kleiner ist als $1.05.10^{-2}$ J/cmsK und kleiner als die thermische Leitfähigkeit der zweiten Scheibe (3) ist, und deren Dicke wenigstens gleich der dreifachen Dicke der genannten Schicht (1) aus elektrooptischen Material ist.

2. Schirm nach Anspruch 1, dadurch gekennzeichnet, dass die genannten Elektroden gekreuzte Elektrodennetze bilden.

3. Schirm nach Anspruch 1, dadurch gekennzeichnet, dass die genannte erste Scheibe vollständig aus dem genannten Isoliermaterial gebildet ist.

4. Schirm nach Anspruch 3, dadurch gekennzeichnet, dass die genannte erste Scheibe aus Plexiglas und die genannte zweite Scheibe aus Glas ist.

5. Schirm nach Anspruch 1, dadurch gekennzeichnet, dass das genannte elektrooptische Material durch einen Flüssigkristall gebildet ist, welcher eine smektische Phase aufweist.

**Claims**

1. Thermo-electrically controlled screen of a visualization device comprising first and second sheets at least one of which is transparent, said sheets enclosing a layer (1) of electro-optical material responding to a mixed thermal and electrical effect, said sheet (2) carrying on its internal face at least one electrode (5), said second sheet (3) carrying on its internal face at least one heating electrode (4), said electrodes permitting to apply to said material an electric control field, characterized in that said first sheet (2) comprises on the side of said electro-optical material at least one layer of an insulating material the thermal conductivity of which is less than $1.05.10^{-2}$ J/cm.s.K and smaller than the thermal conductivity of the second sheet (3), and the thickness of which is at least equal to the threefold thickness of said layer (1) of electro-optical material.

2. Screen according to claim 1, characterized in that said electrodes form crossed electrodes patterns.

3. Screen according to claim 1, characterized in that said first sheet is entirely formed of said insulating material.

4. Screen according to claim 3, characterized in that said first sheet is of plexiglass and said second sheet is of glass.

5. Screen according to claim 1, characterized in that said electro-optical material is formed by a liquid crystal having a smectic phase.

FIG. 1

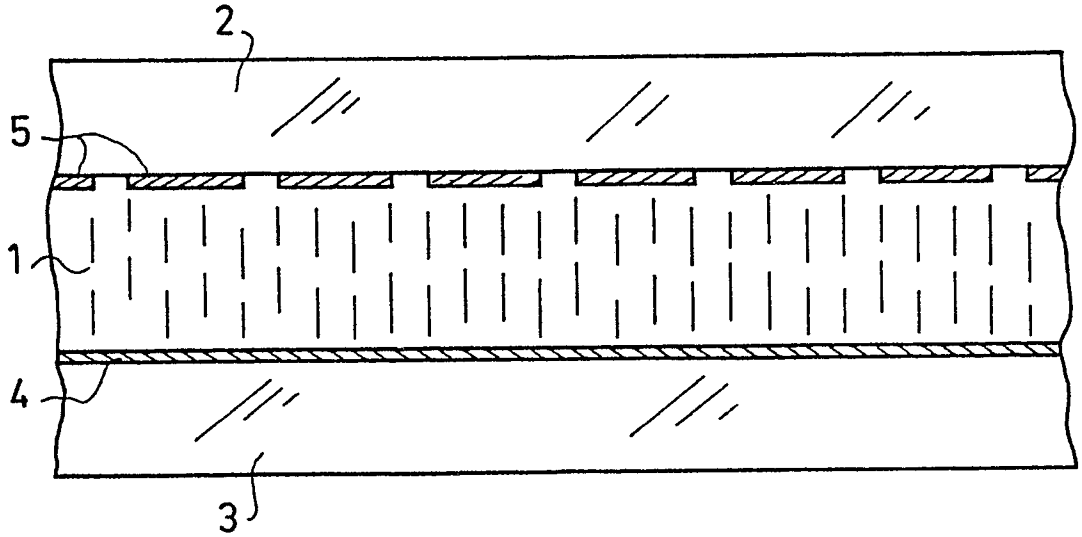
2
5
1
4
3

FIG. 2

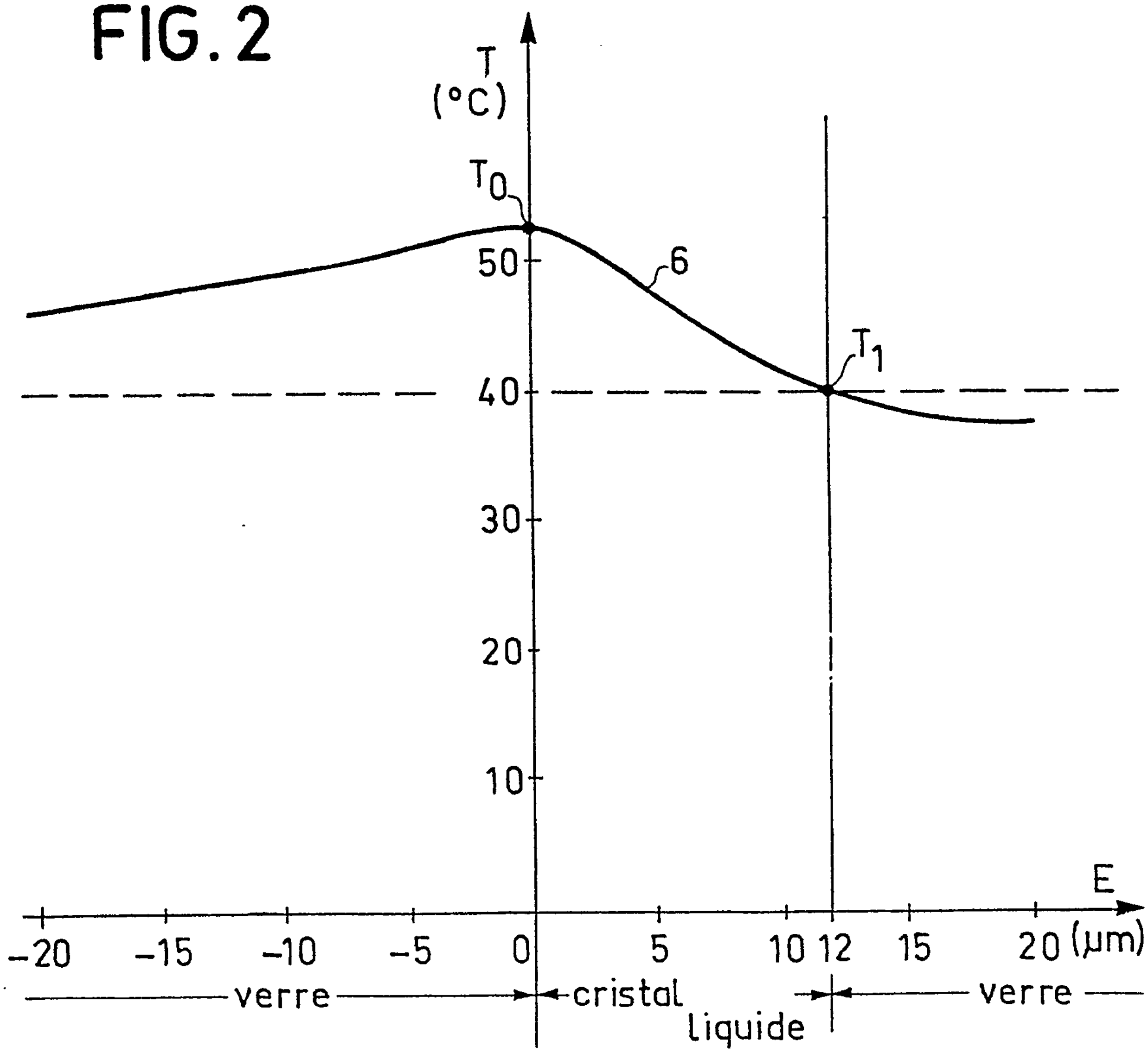
T
(°C)
$T_0$
6
$T_1$
50
40
30
20
10
E
-20
-15
-10
-5
0
5
10
12
15
20
(µm)
verre
cristal
liquide
verre

FIG. 3

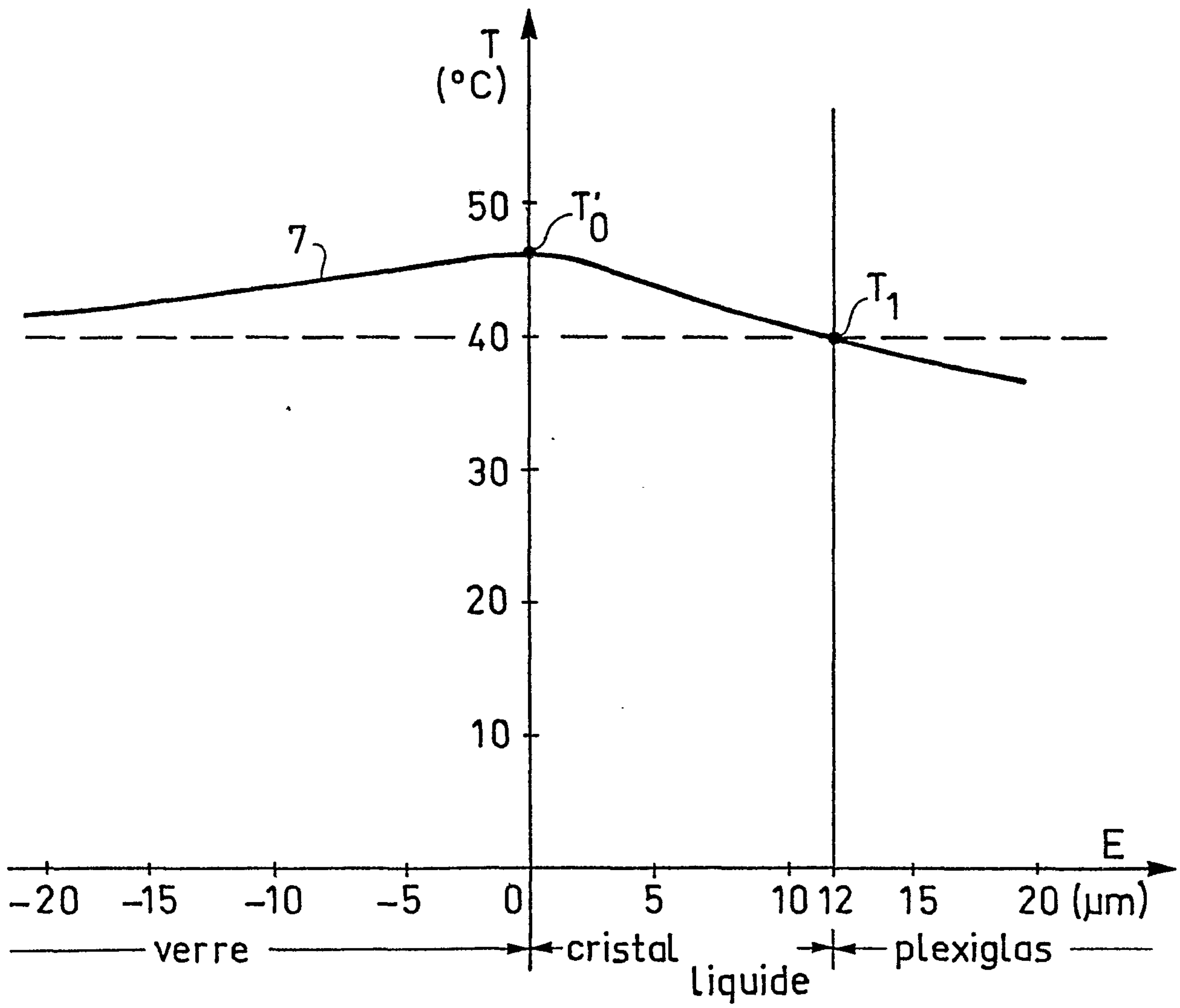

T (°C)
50
40
30
20
10
$T'_0$
$T_1$
7
E
-20
-15
-10
-5
0
5
10
12
15
20 (µm)
verre
cristal liquide
plexiglas